(19) Europäisches Patentamt / European Patent Office / Office européen des brevets

(11) **EP 4 246 492 A1**

(12) **EUROPEAN PATENT APPLICATION**
published in accordance with Art. 153(4) EPC

(43) Date of publication:
**20.09.2023 Bulletin 2023/38**

(21) Application number: **21905431.9**

(22) Date of filing: **18.11.2021**

(51) International Patent Classification (IPC):
**G08G 1/16** (2006.01)

(52) Cooperative Patent Classification (CPC):
**B60W 30/095; G08G 1/16**

(86) International application number:
**PCT/CN2021/131390**

(87) International publication number:
**WO 2022/127502 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.12.2020 CN 202011493106**

(71) Applicant: **Huawei Technologies Co., Ltd.
Shenzhen, Guangdong 518129 (CN)**

(72) Inventors:
• **ZHOU, Wei
  Shenzhen, Guangdong 518129 (CN)**
• **LIU, Xiaoqing
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CONTROL METHOD AND DEVICE**

(57) A control method and apparatus are disclosed, so that a current vehicle can predict a risk location of a collision with another vehicle, and output control information, thereby improving driving safety. In the method, information about a second terminal may be obtained, and the information about the second terminal indicates a size of the second terminal. In addition, information about a second lane on which the second terminal is located is obtained, and the information about the second lane indicates a curvature radius of the second lane. To implement collision prediction and control, the control information is output based on the information about the second terminal and the information about the second lane, and the control information indicates predicted information of a collision between a first terminal and the second terminal, so that the first terminal performs braking or avoidance, thereby avoiding a collision with the second terminal.

S601. Obtain information about a second terminal, where the information about the second terminal indicates a size of the second terminal

S602. Obtain information about a second lane on which the second terminal is located, where the information about the second lane indicates a curvature radius of the second lane

S603. Output control information based on the information about the second terminal and the information about the second lane, where the control information indicates predicted information of a collision between a first terminal and the second terminal

FIG. 6

## Description

This application claims priority to Chinese Patent Application No. 202011493106.1, filed with the China National Intellectual Property Administration on December 17, 2020, and entitled "CONTROL METHOD AND APPARATUS", which is incorporated herein by reference in its entirety.

## TECHNICAL FIELD

Embodiments of this application relate to the vehicle control field, and more specifically, to a control method and apparatus.

## BACKGROUND

Autonomous driving is a mainstream application in the field of artificial intelligence. An autonomous driving technology relies on collaboration of computer vision, radar, a monitoring apparatus, a global positioning system, and the like, to implement autonomous driving of a motor vehicle without active human operations. An autonomous driving vehicle uses various computing systems to assist in transporting passengers or goods from one location to another location. Some autonomous driving vehicles may require some initial or continuous inputs from operators (such as navigators, drivers, or passengers). The autonomous driving vehicle allows the operator to switch from a manual operation mode to an autonomous driving mode or a driving mode therebetween. With the autonomous driving technology, no human is required to drive a motor vehicle. Therefore, driving errors caused by humans can be effectively avoided in theory, traffic accidents can be reduced, and road transportation efficiency can be increased. Therefore, the autonomous driving technology attracts increasing attention.

In autonomous driving and assisted driving, an intelligent vehicle may sense an ambient environment by using a sensor. Commonly used sensors include a millimeter-wave radar, a camera, a laser radar, and the like. A vehicle may detect and classify ambient environments by using the sensors, transmit the information to a planning and control module, to make a decision on a driving route of the vehicle, and finally execute the decision by using an executor, thereby completing an entire autonomous driving process or an entire assisted driving process.

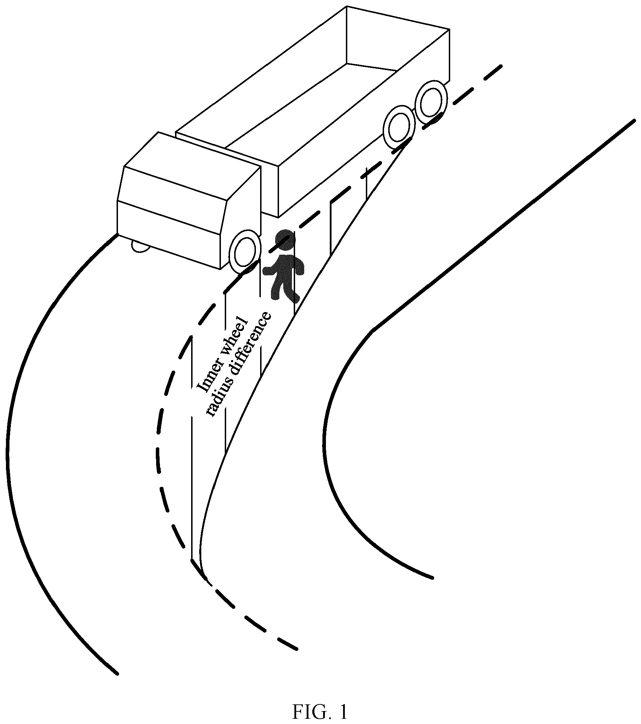

When a traveling vehicle turns, a rear wheel does not travel along but deviates from a track of a corresponding front wheel. As shown in FIG. 1, a deviation formed by turning of the vehicle is referred to as a wheel radius difference. A longer vehicle body indicates a larger wheel radius difference. An inner wheel radius difference is a difference between a turning radius of an inner front wheel and a turning radius of an inner rear wheel when the vehicle turns. For example, when a large engineering vehicle, usually with a long vehicle body, is making a turn, a head of the vehicle completes the turn and the body has not yet completed the turn, and a wheel radius difference formed thereby becomes a visual blind spot of a driver. If another vehicle or a pedestrian is in the visual blind spot, the another vehicle or the pedestrian may be caught by the vehicle body that turns later and fall victim to a possible traffic accident. Therefore, to ensure safety, any other vehicle or pedestrian should keep away from front wheels of the turning vehicle, to avoid being run over by rear wheels of the turning vehicle.

Therefore, there is an urgent need for a method to detect a dangerous area of the turning vehicle, to prevent another vehicle from being in the dangerous area of the turning vehicle, and improve driving safety.

## SUMMARY

Embodiments of this application provide a control method and apparatus, so that a current terminal can predict a risk location of a collision with another terminal, and output control information, thereby improving driving safety.

According to a first aspect, a control method is provided, where the method includes: obtaining information about a second terminal, where the information about the second terminal indicates a size of the second terminal; obtaining information about a second lane on which the second terminal is located, where the information about the second lane indicates a curvature radius of the second lane; and outputting control information based on the information about the second terminal and the information about the second lane, where the control information indicates predicted information of a collision between a first terminal and the second terminal.

The control method in this embodiment of this application may be performed by the first terminal, and may be applied to a case in which two vehicles may have a collision risk when traveling on adjacent curves. The first terminal obtains the information about the second terminal and the information about the lane, to determine a predicted collision location, and then the first terminal is warned or controlled, so that the first terminal actively performs braking or avoidance outside the predicted collision location, thereby avoiding a passive collision risk and improving driving safety.

In a possible implementation of the first aspect, the outputting control information meets at least one of the following: the control information includes a predicted collision location, and the outputting control information includes: displaying the predicted collision location by using a display apparatus; the control information includes sound warning information, and the outputting control information includes: playing the sound warning information by using a speaker; or the control information includes vehicle control information, and the outputting control information includes: controlling the first terminal by using a braking system, to avoid a predicted collision location.

Based on the control method in this embodiment of this application, the first terminal outputs the control information in the foregoing manner, so that the first terminal actively takes a measure to avoid the predicted collision location, thereby improving driving safety.

In a possible implementation of the first aspect, the second terminal is a second vehicle, the information about the second terminal includes a wheel track of the second vehicle and a wheel base of the second vehicle, the control information includes the predicted collision location, and the predicted collision location is obtained based on the curvature radius of the second lane, the wheel track of the second vehicle, and the wheel base of the second vehicle.

In a possible implementation of the first aspect, a type of the second vehicle is a trailer, the information about the second terminal further includes a distance between a traction pin of the second vehicle and a rear axle of a tractor, and the predicted collision location is obtained based on the curvature radius of the second lane, the wheel track of the second vehicle, the wheel base of the second vehicle, and the distance between the traction pin of the second vehicle and the rear axle of the tractor.

The control method in this embodiment of this application provides the foregoing specific method for determining a predicted collision location. In addition, when the second terminal is a special type of a trailer, because the trailer may cause a larger dangerous area, this application provides a special method for predicting a collision location.

In a possible implementation of the first aspect, the second terminal is a second vehicle, the information about the second terminal includes a vehicle body length of the second vehicle, the control information includes the predicted collision location, and the predicted collision location is determined based on the curvature radius of the second lane and the vehicle body length of the second vehicle.

If the wheel track and the wheel base of the second terminal cannot be directly obtained due to a blocked vehicle body of the second terminal or another case, an embodiment of this application further provides a simple and convenient method for determining a predicted collision location.

In a possible implementation of the first aspect, the information about the second terminal and the information about the second lane are obtained by using at least one sensor, map module, and/or communication module.

Based on the control method in this embodiment of this application, the information about the second terminal and the information about the second lane may be obtained in a plurality of existing manners. In a specific environment, a more convenient information obtaining manner may be selected, so that the information is more accurately obtained.

In a possible implementation of the first aspect, the second lane is adjacent to a first lane on which the first terminal is located, and the predicted collision location is located on a curve of the first lane or the second lane.

According to a second aspect, a control apparatus is provided, where the apparatus includes: an obtaining module, configured to obtain information about a second terminal, where the information about the second terminal indicates a size of the second terminal; and the obtaining module is further configured to obtain information about a second lane on which the second terminal is located, where the information about the second lane indicates a curvature radius of the second lane; and a processing module, configured to output control information based on the information about the second terminal and the information about the second lane, where the control information indicates predicted information of a collision between a first terminal and the second terminal.

In a possible implementation of the second aspect, the outputting control information meets at least one of the following: the control information includes a predicted collision location, and that the processing module outputs control information includes: displaying the predicted collision location by using a display apparatus; the control information includes sound warning information, and that the processing module outputs control information includes: playing the sound warning information by using a speaker; or the control information includes vehicle control information, and that the processing module outputs control information includes: controlling the first terminal by using a braking system, to avoid a predicted collision location.

In a possible implementation of the second aspect, the second terminal is a second vehicle, the information about the second terminal includes a wheel track of the second vehicle and a wheel base of the second vehicle, the control information includes the predicted collision location, and the predicted collision location is obtained based on the curvature radius of the second lane, the wheel track of the second vehicle, and the wheel base of the second vehicle.

In a possible implementation of the second aspect, a type of the second vehicle is a trailer, the information about the second terminal further includes a distance between a traction pin of the second vehicle and a rear axle of a tractor, and the predicted collision location is obtained based on the curvature radius of the second lane, the wheel track of the second vehicle, the wheel base of the second vehicle, and the distance between the traction pin of the second vehicle and the rear axle of the tractor.

In a possible implementation of the second aspect, the second terminal is a second vehicle, the information about the second terminal includes a vehicle body length of the second vehicle, the control information includes the predicted collision location, and the predicted collision location is determined based on the curvature radius of the second lane and the vehicle body length of the second vehicle.

In a possible implementation of the second aspect, the obtaining module is a sensor, a map module, or a communication module.

In a possible implementation of the second aspect, the second lane is adjacent to a first lane on which the first terminal is located, and the predicted collision location is located on a curve of the first lane or the second lane.

According to a third aspect, a control apparatus is provided, including at least one processor and an interface circuit, where the interface circuit is configured to provide program instructions or data for the at least one processor; and the at least one processor is configured to execute the program instructions, to implement the control method in any one of the implementations of the first aspect.

According to a fourth aspect, a vehicle is provided, including the control apparatus in any one of the implementations of the second aspect.

According to a fifth aspect, a computer-readable storage medium is provided, where program instructions are stored in the computer-readable storage medium, and when the program instructions are run by a computer, the control method in any one of the implementations of the first aspect is implemented.

According to a sixth aspect, a chip is provided, where the chip includes at least one processor and a data interface, and the processor reads, by using the data interface, instructions stored in a memory, to perform the control method in any one of the implementations of the first aspect.

**BRIEF DESCRIPTION OF THE DRAWINGS**

FIG. 1 is a schematic diagram of a wheel radius difference formed when a vehicle turns;
FIG. 2 is a function block diagram of a vehicle according to this application;
FIG. 3 is a schematic block diagram of an autonomous driving system according to this application;
FIG. 4 is a schematic diagram of application of a cloud-side instruction-based autonomous driving vehicle according to this application;
FIG. 5 is a schematic diagram of a possible collision risk when two vehicles meet on curves according to this application;
FIG. 6 is a schematic flowchart of a control method according to this application;
FIG. 7 is a schematic block diagram of a control method according to this application;
FIG. 8 is a schematic diagram of determining a predicted collision location according to this application;
FIG. 9 is a schematic block diagram of a simplified control method according to this application;
FIG. 10 is a schematic block diagram of a control apparatus according to this application; and

FIG. 11 is a schematic diagram of a structure of a control apparatus according to this application.

**DESCRIPTION OF EMBODIMENTS**

The following describes technical solutions in this application with reference to the accompanying drawings.

The technical solutions in embodiments of this application may be applied to various vehicles. The vehicle may be specifically an internal combustion locomotive, a smart electric vehicle, or a hybrid vehicle, or the vehicle may be a vehicle of another power type or the like. Alternatively, the technical solutions in embodiments of this application may be applied to various other vehicles, such as an airplane or a ship. This is not limited in embodiments of this application.

For ease of description, the following describes the technical solutions in embodiments of this application by using a vehicle as an example.

The vehicle in embodiments of this application may be a manual driving vehicle, an autonomous driving vehicle, or an assisted driving vehicle. For example, an autonomous driving mode may be configured for the autonomous driving vehicle. The autonomous driving mode may be a fully autonomous driving mode, or may be a partially autonomous driving mode. This is not limited in embodiments of this application.

Another driving mode may be further configured for the vehicle in embodiments of this application. The another driving mode may include one or more of a plurality of driving modes, such as a sports mode, an ECO mode, a standard mode, a snow mode, and a high-performance mode. The autonomous driving vehicle may switch between the autonomous driving mode and the plurality of foregoing driving modes (in which a driver drives the vehicle). This is not limited in embodiments of this application.

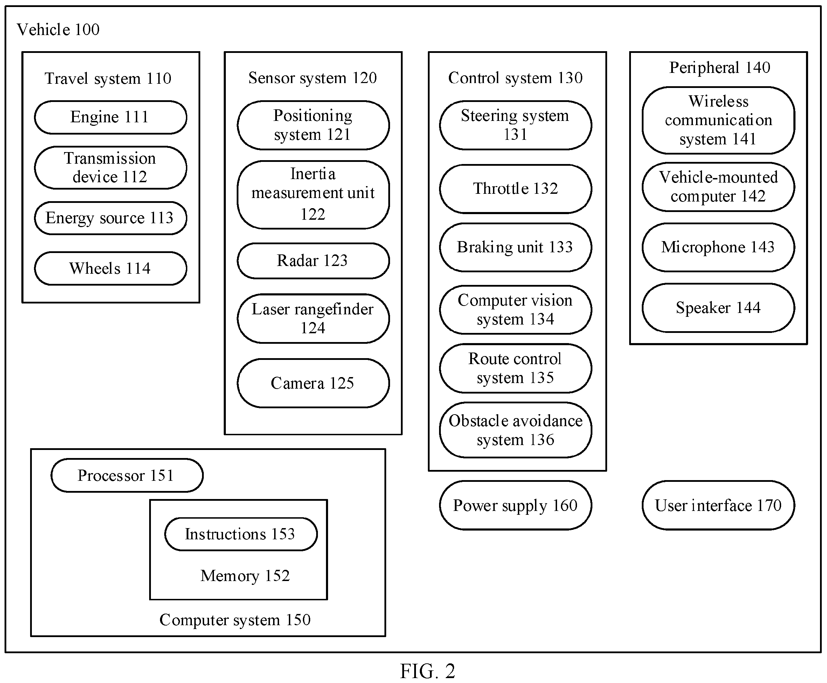

FIG. 2 is a function block diagram of a vehicle 100 according to an embodiment of this application.

The vehicle 100 may be a manual driving vehicle, or the vehicle 100 may be configured in a fully or partially autonomous driving mode.

In an example, the vehicle 100 may control itself when being in an autonomous driving mode, determine a current state of the vehicle and a current state of an ambient environment of the vehicle through a manual operation, determine possible behavior of at least one another vehicle in the ambient environment, determine a confidence level corresponding to a possibility that the another vehicle executes the possible behavior, and controls the vehicle 100 based on the determined information. When the vehicle 100 is in the autonomous driving mode, the vehicle 100 may be set to operate without interacting with a person.

The vehicle 100 may include various subsystems, such as a travel system 110, a sensor system 120, a control system 130, one or more peripherals 140, a power supply 160, a computer system 150, and a user interface 170.

Optionally, the vehicle 100 may include more or fewer subsystems, and each subsystem can include a plurality of elements. In addition, the subsystems of the vehicle 100 and the elements may be interconnected in a wired or wireless manner.

For example, the travel system 110 may include a component for providing power motion to the vehicle 100. In an embodiment, the travel system 110 may include an engine 111, a transmission device 112, an energy source 113, and wheels 114/tires. The engine 111 may be an internal combustion engine, a motor, an air compression engine, or a combination of other types of engines, such as a hybrid engine consisting of a gasoline engine and a motor, or a hybrid engine consisting of an internal combustion engine and an air compression engine. The engine 111 may convert the energy source 113 into mechanical energy.

For example, the energy source 113 may include gasoline, diesel, other oil-based fuel, propane, other compressed-gas-based fuel, ethanol, a solar panel, a battery, and another power source. The energy source 113 may also provide energy for another system of the vehicle 100.

For example, the transmission device 112 may include a gearbox, a differential, and a drive shaft, and the transmission device 112 may transmit, to the wheels 114, mechanical power from the engine 111.

In an embodiment, the transmission device 112 may further include another device, for example, a clutch. The drive shaft may include one or more shafts that can be coupled to one or more wheels 114.

For example, the sensor system 120 may include sensors that sense information about an ambient environment of the vehicle 100.

For example, the sensor system 120 may include a positioning system 121 (like a GPS system, a BeiDou system, or another positioning system), an inertia measurement unit (inertial measurement unit, IMU) 122, a radar 123, a laser rangefinder 124, and a camera 125. The sensor system 120 may further include sensors (such as an in-vehicle air quality monitor, a fuel gauge, and an oil temperature gauge) of an internal system of the monitored vehicle 100. Sensor data from one or more of the sensors can be used to detect an object and a corresponding feature (a location, a shape, a direction, a speed, or the like) of the object. Such detection and recognition are key functions of a safe operation of the autonomous driving vehicle 100.

The positioning system 121 may be configured to estimate a geographical location of the vehicle 100. The IMU 122 may be configured to sense a location change and an orientation change of the vehicle 100 based on inertial acceleration. In an embodiment, the IMU 122 may be a combination of an accelerometer and a gyroscope.

For example, the radar 123 may sense an object within the ambient environment of the vehicle 100 by using a radio signal. In some embodiments, in addition to sensing the object, the radar 123 can be further configured to sense a speed and/or a traveling direction of the object.

For example, the laser rangefinder 124 may sense, by using a laser, an object in an environment in which the vehicle 100 is located. In some embodiments, the laser rangefinder 124 may include one or more laser sources, a laser scanner, one or more detectors, and another system component.

For example, the camera 125 may be configured to capture a plurality of images of the ambient environment of the vehicle 100. For example, the camera 125 may be a static camera or a video camera.

As shown in FIG. 2, the control system 130 controls an operation of the vehicle 100 and an operation of a component of the vehicle. The control system 130 may include various elements, such as a steering system 131, a throttle 132, a braking unit 133, a computer vision system 134, a route control system 135, and an obstacle avoidance system 136.

For example, the steering system 131 may be operated to adjust a traveling direction of the vehicle 100. For example, in an embodiment, the steering system may be a steering wheel system. The throttle 132 may be configured to control an operation speed of the engine 111, to control a speed of the vehicle 100.

For example, the braking unit 133 may be configured to control the vehicle 100 to decelerate, and the braking unit 133 may slow the wheels 114 down by using friction force. In another embodiment, the braking unit 133 may convert kinetic energy of the wheels 114 into a current. Alternatively, the braking unit 133 may slow down a rotational speed of the wheels 114 in another manner, to control the speed of the vehicle 100.

As shown in FIG. 2, the computer vision system 134 may be operated to process and analyze the image captured by the camera 125, to recognize an object and/or a feature in the ambient environment of the vehicle 100. The object and/or feature may include a traffic signal, a road boundary, and an obstacle. The computer vision system 134 may use an object recognition algorithm, a structure from motion (structure from motion, SFM) algorithm, video tracking, and another computer vision technology. In some embodiments, the computer vision system 134 may be configured to: draw a map for an environment, track an object, estimate a speed of an object, and the like.

For example, the route control system 135 may be configured to determine a driving route for the vehicle 100. In some embodiments, the route control system 135 may determine the driving route for the vehicle 100 with reference to data from the sensor, the GPS, and one or more predetermined maps.

As shown in FIG. 2, the obstacle avoidance system 136 may be configured to recognize, evaluate, and avoid or otherwise cross a potential obstacle in an environment of the vehicle 100.

In an instance, the control system 130 may additionally or replaceably include a component other than the components shown and described. Alternatively, some of the components shown above may be removed from the control system 130.

As shown in FIG. 2, the vehicle 100 may interact with an external sensor, another vehicle, another computer system, or a user by using the peripheral 140. The peripheral 140 may include a wireless communication system 141, a vehicle-mounted computer 142, a microphone 143, and/or a speaker 144.

In some embodiments, the peripheral 140 may provide a means for the vehicle 100 to interact with the user interface 170. For example, the vehicle-mounted computer 142 may provide information to the user of the vehicle 100. The vehicle-mounted computer 142 may further be operated to receive a user input through the user interface 116. The vehicle-mounted computer 142 may be operated by using a touchscreen. In another case, the peripheral 140 may provide a means for the vehicle 100 to communicate with another device in the vehicle. For example, the microphone 143 may receive audio (such as a voice command or another audio input) from the user of the vehicle 100. Similarly, the speaker 144 may output audio to the user of the vehicle 100.

As illustrated in FIG. 2, the wireless communication system 141 may wirelessly communicate with one or more devices directly or through a communication network. For example, the wireless communication system 141 may use 3G cellular communications, such as code division multiple access (code division multiple access, CDMA), EVDO, a global system for mobile communications (global system for mobile communications, GSM), or a general packet radio service (general packet radio service, GPRS); 4G cellular communications, for example, long term evolution (long term evolution, LTE); or 5G cellular communications. The wireless communication system 141 may communicate with a wireless local area network (wireless local area network, WLAN) through wireless fidelity (Wi-Fi).

In some embodiments, the wireless communication system 141 may directly communicate with a device by using an infrared link, Bluetooth, or a ZigBee (Zig-Bee) protocol; or by using other wireless protocols, such as various vehicle communication systems. For example, the wireless communication system 141 may include one or more dedicated short range communications (dedicated short range communications, DSRC) devices for public and/or private data communication between vehicles and/or between roadside units.

As shown in FIG. 2, the power supply 160 may provide power to various components of the vehicle 100. In an embodiment, the power supply 160 may be a rechargeable lithium-ion battery or a lead-acid battery. One or more battery packs of such batteries can be configured as a power supply to provide power to the components of the vehicle 100. In some embodiments, the power supply 160 and the energy source 113 can be implemented together, as in some battery electric vehicles.

For example, some or all of functions of the vehicle 100 may be controlled by the computer system 150, the computer system 150 may include at least one processor 151, and the processor 151 executes instructions 153 stored in, for example, a non-transient computer-readable medium in a memory 152. The computer system 150 may alternatively be a plurality of computing devices that control an individual component or a subsystem of the vehicle 100 in a distributed manner.

For example, the processor 151 may be any conventional processor, for example, a commercially available CPU.

Optionally, the processor may be a dedicated device like an ASIC or another hardware-based processor. Although FIG. 1 functionally illustrates the processor, the memory, and other elements of a computer that are in a same block, a person of ordinary skill in the art should understand that the processor, the computer, or the memory may actually include a plurality of processors, computers, or memories that may or may not be stored in a same physical housing. For example, the memory may be a hard disk drive or another storage medium located in a housing different from the computer. Therefore, it is understood that a reference to the processor or the computer includes a reference to a set of processors, computers, or memories that may or may not be operated in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some of the processes described herein are executed on a processor disposed in the vehicle, while others are executed by a remote processor, including a step necessary for performing a single manipulation.

In some embodiments, the memory 152 may include the instructions 153 (for example, program logic), and the instructions 153 may be executed by the processor 151 to execute various functions of the vehicle 100, including the functions described above. The memory 152 may also include additional instructions, including instructions on sending data to, receiving data from, interacting with, and/or controlling one or more of the travel system 110, the sensor system 120, the control system 130, and the peripheral 140.

For example, in addition to the instructions 153, the memory 152 may further store data, such as a road map, route information, a location, a direction, and a speed of the vehicle and other such vehicle data, as well as other information. Such information may be used by the vehicle 100 and the computer system 150 during an operation of the vehicle 100 in an autonomous mode, a semi-autonomous mode, and/or a manual mode.

As shown in FIG. 2, the user interface 170 may be configured to provide information to or receive information from the user of the vehicle 100. Optionally, the user interface 170 may be included in one or more input/output devices in a set of peripherals 140, such as the wireless communication system 141, the vehicle-mounted computer 142, the microphone 143, and the speaker 144.

In this embodiment of this application, the computer system 150 may control the function of the vehicle 100 based on inputs received from various subsystems (such as the travel system 110, the sensor system 120, and the control system 130) and the user interface 170. For example, the computer system 150 may use an input from the control system 130 to control the braking unit 133, to avoid an obstacle that is detected by the sensor system 120 and the obstacle avoidance system 136. In some embodiments, the computer system 150 can be operated to provide control over many aspects of the vehicle 100 and the subsystem of vehicle.

Optionally, one or more of the foregoing components may be installed separately from or associated with the vehicle 100. For example, the memory 152 may be partially or completely separated from the vehicle 100. The foregoing components may be communicatively coupled together in a wired and/or wireless manner.

Optionally, the foregoing components are merely examples. During actual application, components in the foregoing modules may be added or deleted based on an actual requirement. FIG. 2 should not be understood as a limitation on this embodiment of this application.

Optionally, the vehicle 100 may be an autonomous driving vehicle traveling on a road and may recognize an object in the ambient environment of the vehicle, to determine to adjust a current speed. The object may be another vehicle, a traffic control device, or an object of another type. In some examples, each recognized object may be considered independently and may be used to determine, based on a feature of each object, like a current speed of the object, acceleration of the object, or a spacing between the object and the vehicle, a speed to be adjusted by the autonomous driving vehicle.

Optionally, the vehicle 100 or the computing device (like the computer system 150, the computer vision system 134, or the memory 152 in FIG. 2) associated with the vehicle 100 may predict behavior of the recognized object based on the feature of the recognized object and a state (like traffic, rain, or ice on a road) of the ambient environment.

Optionally, recognized objects depend on behavior of each other. Therefore, all the recognized objects may further be considered together to predict behavior of a single recognized object. The vehicle 100 can adjust the speed of the vehicle 100 based on the predicted behavior of the recognized object. In other words, the autonomous driving vehicle can determine, based on the predicted behavior of the object, that the vehicle needs to be adjusted (for example, accelerated, decelerated, or stopped) to a stable state. In this process, another factor may alternatively be considered to determine the speed of the vehicle 100, like a horizontal location of the vehicle 100 on a road on which the vehicle travels, curvature of the road, and proximity between a static object and a dynamic object.

In addition to providing the instruction on adjusting the speed of the autonomous driving vehicle, the computing device may further provide an instruction on changing a steering angle of the vehicle 100, so that the autonomous driving vehicle follows a given track and/or maintains safe lateral and longitudinal distances between the autonomous driving vehicle and an object (for example, a car on an adjacent lane on the road) near the autonomous driving vehicle.

The vehicle 100 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in this embodiment of this application.

In a possible implementation, the vehicle 100 shown in FIG. 2 may be an autonomous driving vehicle. The following describes an autonomous driving system in detail.

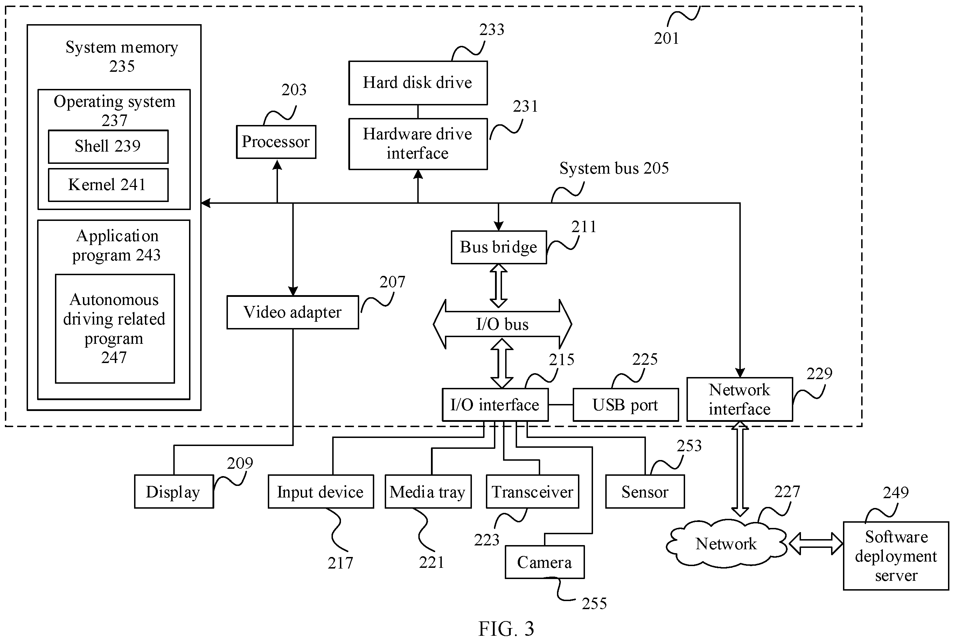

FIG. 3 is a schematic diagram of an autonomous driving system according to an embodiment of this application.

The autonomous driving system shown in FIG. 3 includes a computer system 201. The computer system 201 includes a processor 203, and the processor 203 is coupled to a system bus 205. The processor 203 may be one or more processors, and each processor may include one or more processor cores. A video adapter (video adapter) 207 may drive a display 209, and the display 209 is coupled to the system bus 205. The system bus 205 may be coupled to an input/output (I/O) bus 213 by using a bus bridge 211, and an I/O interface 215 is coupled to the I/O bus. The I/O interface 215 communicates with a plurality of I/O devices, such as an input device 217 (like a keyboard, a mouse, or a touchscreen) and a media tray (media tray) 221 (like a CD-ROM or a multimedia interface). A transceiver 223 may transmit and/or receive a radio communication signal, and a camera 255 may capture static and dynamic digital video images. An interface connected to the I/O interface 215 may be a USB port 225.

The processor 203 may be any conventional processor, like a reduced instruction set computing (reduced instruction set computing, RISC) processor, a complex instruction set computing (complex instruction set computing, CISC) processor, or a combination thereof.

Optionally, the processor 203 may be a dedicated apparatus, for example, an application-specific integrated circuit (application-specific integrated circuit, ASIC). The processor 203 may be a neural network processor or a combination of a neural network processor and the foregoing conventional processor.

Optionally, in the various embodiments described in this application, the computer system 201 may be located away from an autonomous driving vehicle, and may wirelessly communicate with the autonomous driving vehicle. In another aspect, some of the processes described in this specification are executed on a processor disposed in the autonomous driving vehicle, and others are executed by a remote processor, including an action required to perform a single manipulation.

The computer system 201 may communicate with a software deployment server 249 through a network interface 229. The network interface 229 may be a hardware network interface, for example, a network interface card. A network 227 may be an external network, for example, the Internet, or may be an internal network, like the Ethernet or a virtual private network (virtual private network, VPN). Optionally, the network 227 may alternatively be a wireless network, like a Wi-Fi network or a cellular network.

As shown in FIG. 3, a hard disk drive interface is coupled to the system bus 205, the hardware drive interface 231 may be connected to a hard disk drive 233, and a system memory 235 is coupled to the system bus 205. Data running in the system memory 235 may include an operating system 237 and an application program 243. The operating system 237 may include a shell (shell) 239 and a kernel (kernel) 241. The shell 239 is an interface between a user and the kernel (kernel) of the operating system. The shell may be an outermost layer of the operating system. The shell may manage an interaction between the user and the operating system, for example, waiting for a user input, explaining the user input to the operating system, and processing a variety of output results of the operating system. The kernel 241 may include components in the operating system that are configured to manage a memory, a file, a peripheral, and a system resource. The kernel directly interacts with hardware. The kernel of the operating system usually runs processes, provides communication between the processes, and provides CPU time slice management, interruption, memory management, I/O management, and the like. The application program 243 includes a program for controlling autonomous driving of the vehicle, for example, a program that manages an interaction between the autonomous driving vehicle and an obstacle on a road, a program that controls a route or a speed of the autonomous driving vehicle, a program that controls an interaction between the autonomous driving vehicle and another autonomous driving vehicle on a road. The application program 243 also exists on a system of the software deployment server 249. In an embodiment, when an autonomous driving related program 247 needs to be executed, the computer system 201 may download the application program from the software deployment server 249.

For example, the application program 243 may further be an application program configured to perform autonomous driving to recognize driving behavior of another vehicle on a road.

For example, a sensor 253 may be associated with the computer system 201, and the sensor 253 may be configured to detect an ambient environment of the computer system 201.

For example, the sensor 253 may detect an animal, a vehicle, an obstacle, a pedestrian crosswalk, and the like. Further, the sensor may detect ambient environments of the objects such as the animal, the vehicle, the obstacle, and the pedestrian crosswalk, for example, an ambient environment of the animal, like another animal around the animal, a weather condition, and brightness of the ambient environment.

Optionally, if the computer system 201 is located on the autonomous driving vehicle, the sensor may be a camera, an infrared sensor, a chemical detector, a microphone, or the like.

For example, in a driving scenario, the sensor 253 may be configured to detect a size or a location of an obstacle around the vehicle, to prevent the vehicle from colliding with the obstacle.

In an example, the computer system 150 shown in FIG. 2 may further receive information from or transfer information to another computer system. Alternatively, sensor data collected from the sensor system 120 of the vehicle 100 may be transferred to another computer, so that the data is to be processed.

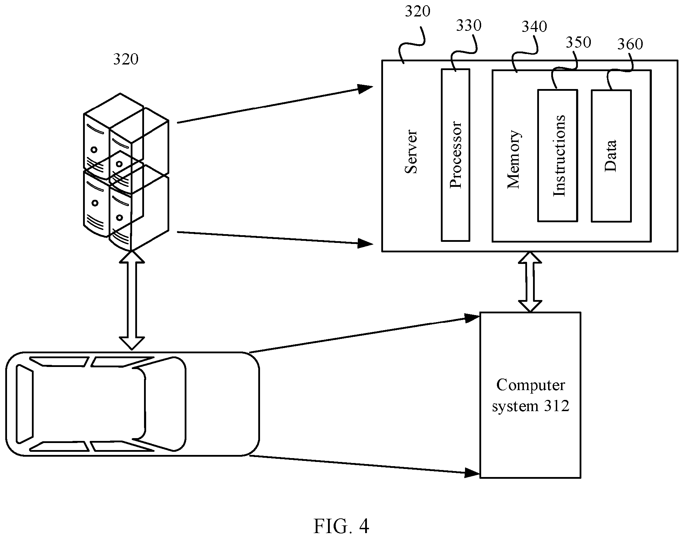

For example, as shown in FIG. 4, data from a computer system 312 may be transferred to a cloud-side server 320 through a network for further processing. The network and an intermediate node may include various configurations and protocols, including the Internet, the World Wide Web, an intranet, a virtual private network, a wide area network, a local area network, a private network that uses proprietary communication protocols of one or more companies, the Ethernet, the Wi-Fi, the HTTP, and various combinations thereof. Such communication may be performed by any device like a modem and a wireless interface that can transfer data to and from another computer

In an example, the server 320 may include a server having a plurality of computers, for example, a load balancing server cluster, and exchange information with different nodes of the network, to receive data from the computer system 312, and process and transfer the data. The server may be configured to be similar to the computer system 312, and has a processor 330, a memory 340, instructions 350, and data 360.

For example, the data 360 of the server 320 may include information related to road conditions around the vehicle. For example, the server 320 may receive, detect, store, update, and transfer the information related to the road conditions of the vehicle.

For example, the information related to the road conditions around the vehicle includes information about another vehicle and information about an obstacle around the vehicle.

It should be understood that FIG. 2 to FIG. 4 are merely examples of possible application scenarios of the control method in this application, and do not constitute a limitation on this application. In addition to the application scenarios shown in FIG. 2 to FIG. 4, the control method in this application may further be applied to another possible scenario.

For a target that may be in a dangerous area generated when a vehicle turns, in a solution in a conventional technology, a sensor is generally disposed on the turning vehicle. When it is detected that the target is too close to the vehicle body, an alarm is given or a braking measure is taken, so that safety of the target in the dangerous area generated when the vehicle turns is ensured, and a traffic accident is avoided.

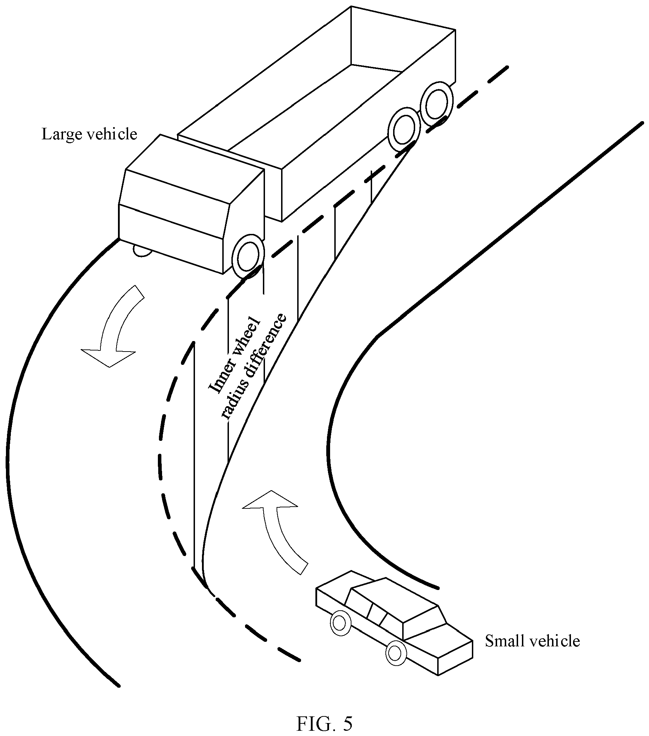

For a scenario in FIG. 5, a large vehicle and a small vehicle travel in opposite directions on curves. When the large vehicle turns, a driving route of the large vehicle may partially intrude into an opposite lane due to an inner wheel radius difference, thereby affecting passing of the small opposite vehicle. In this case, it is recommended that the small vehicle waits outside the dangerous area of the large vehicle, until the large vehicle completes turning, to ensure safety. Therefore, the small vehicle needs to determine the dangerous area of the large vehicle, to avoid entering the dangerous area of the large vehicle. However, the problem cannot be resolved based on all the foregoing solutions in the conventional technology.

Therefore, an embodiment of this application provides a control method. A dangerous area of an oncoming vehicle is detected, so that a current vehicle can actively take a measure to avoid the dangerous area of the oncoming vehicle, thereby ensuring driving safety.

It should be understood that the control method in this embodiment of this application may be applied to the scenario in FIG. 5, that is, on the road curves, the two vehicles travel in the opposite directions on two adjacent lanes, and one vehicle may be in a turning dangerous area of the other vehicle. Alternatively, the control method may be applied to another scenario on road curves, for example, a scenario in which two vehicles travel in a same direction on two adjacent lanes, and one vehicle may be in a turning dangerous area of the other vehicle.

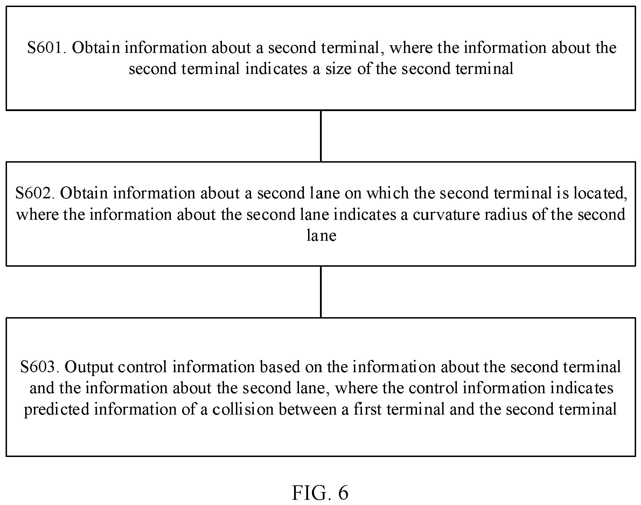

FIG. 6 is a schematic flowchart of a control method according to an embodiment of this application. As shown in FIG. 6, step 601 to step 603 are included. It should be understood that the method shown in FIG. 6 is merely an example rather than a limitation. The control method in this embodiment of this application may include more or fewer steps. This is not limited in this embodiment of this application. The following separately describes the steps in detail.

The method shown in FIG. 6 may be performed by the vehicle shown in FIG. 2, the autonomous driving system shown in FIG. 3, and an assisted driving system or an intelligent driving system that is not shown in this application. The vehicle in FIG. 2 may be a manual driving vehicle, or a fully or partially autonomous driving vehicle.

S601: Obtain information about a second terminal, where the information about the second terminal indicates a size of the second terminal.

In an implementation, the second terminal may be a vehicle, and is marked as a second vehicle. The size of the second terminal may include at least one of a wheel track, a wheel base, and a vehicle body length of the second vehicle. The size information of the second vehicle may be obtained by obtaining the information about the second vehicle. A specific obtaining method may be performed by using a sensor and/or a communication module, and in another possible obtaining manner. For example, the size information of the second vehicle may be detected by using a sensor, or the size information of the second vehicle may be obtained through the Internet of Vehicles.

S602: Obtain information about a second lane on which the second terminal is located, where the information about the second lane indicates a curvature radius of the second lane.

In an implementation, if the second terminal travels on the second lane, the curvature radius of the second lane may be obtained by obtaining the information about the second lane. A specific obtaining method may be performed by using a sensor, a map module, and/or a communication module, and in another possible obtaining manner. For example, the curvature radius of the second lane may be obtained by using a roadside unit.

S603: Output control information based on the information about the second terminal and the information about the second lane, where the control information indicates predicted information of a collision between a first terminal and the second terminal.

In an implementation, the first terminal may be a vehicle having a function of autonomous driving, assisted driving, or intelligent driving. The method in FIG. 6 may be performed by the first terminal, or a control apparatus or a control system on the first terminal. The first terminal travels on a first lane, the first lane is adjacent to the second lane, both the first lane and the second lane have a curve, and the first terminal and the second terminal have a risk of collision on the curves. The control information includes a predicted collision location, and the predicted collision location is located on the curve of the first lane or the second lane.

In this embodiment of this application, a manner of outputting the control information includes: displaying the predicted collision location by using a display apparatus on the first terminal, to remind a driver of the first terminal to take an avoidance or braking measure. The control information may further include sound warning information, and the outputting control information may further be playing the sound warning information by using a speaker on the first terminal, to remind the driver of the first terminal to take an avoidance or braking measure. The control information may further include vehicle control information, and the outputting control information may alternatively be directly controlling, by using a braking system of the first terminal, the first terminal to perform braking or avoid the predicted collision location. The control information may be output in only one of the foregoing manners. For example, the predicted collision location is displayed by using only the display apparatus on the first terminal, to remind the driver of the first terminal to take the avoidance or braking measure. Alternatively, the control information may be output in a plurality of the manners. For example, the sound warning information is played by using the speaker on the first terminal while the predicted collision location is displayed by using the display apparatus on the first terminal, or the first terminal may further be controlled by using the braking system of the first terminal to perform braking or avoid the predicted collision location. This is not limited in this embodiment of this application. It should be understood that the foregoing descriptions are merely examples of the manner of outputting the control information, and does not constitute a limitation on this application. In addition to the foregoing examples, this application may further include another manner of outputting control information.

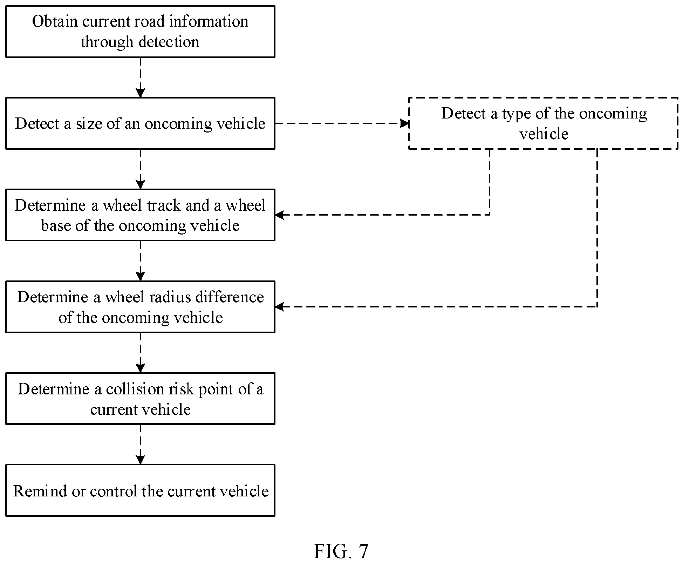

In this embodiment of this application, the predicted collision location may be determined based on the wheel track of the second terminal, the wheel base of the second terminal, and the curvature radius of the second lane. Specifically, a wheel radius difference of the second terminal is calculated based on the wheel track of the second terminal, the wheel base of the second terminal, and the curvature radius of the second lane. For a specific calculation manner, refer to descriptions in FIG. 7. For brevity, details are not described herein in this embodiment of this application. Further, a status of the second terminal is determined based on the wheel radius difference. When the second terminal already intrudes into the first lane from the second lane or the wheel radius difference of the second terminal is greater than or equal to a first threshold (the first threshold may be a manually preset value), an area that the second terminal already passes or is to pass is determined as a dangerous area, and a point that is closest to the first terminal and that is on an edge of the dangerous area is used as the predicted collision location.

Optionally, if it is determined, based on the obtained information about the second terminal, that a type of the second terminal is a trailer, the size of the second terminal further includes a distance between a traction pin of the second terminal and a rear axle of a tractor, and the wheel radius difference of the second terminal is calculated based on the distance between the traction pin of the second terminal and the rear axle of the tractor and the curvature radius of the second lane. For a specific calculation manner, refer to the descriptions in FIG. 7. Then the predicted collision location is determined based on the wheel radius difference of the second terminal. A determining manner is the same as the foregoing manner.

Optionally, if the wheel track and the wheel base of the second terminal cannot be directly obtained due to a blocked vehicle body of the second terminal or another case, an embodiment of this application further provides a simple and convenient method for determining a predicted collision location. If it is first determined that a curvature radius of a second lane is less than a second threshold, and it is determined that a vehicle body length of a second terminal is greater than a third threshold, a collision risk distance is obtained based on the vehicle body length of the second terminal. Specifically, the vehicle body length of the second terminal may be multiplied by a first coefficient to obtain the collision risk distance. Then, on a shortest connection line between a first terminal and the second terminal, a location that is the collision risk distance from the second terminal is determined as the predicted collision location.

The control method in this embodiment of this application may be applied to a case in which two vehicles may have a collision risk when traveling on adjacent curves. A current vehicle obtains information about an oncoming vehicle and information about a lane, to determine a predicted collision location, and then the current vehicle is warned or controlled, so that the current vehicle actively performs braking or avoidance outside the predicted collision location, thereby avoiding a passive collision risk and improving driving safety.

FIG. 7 is a schematic block diagram of a control method according to an embodiment of this application. The following describes the control method in this embodiment of this application in detail with reference to FIG. 7.

(1) Obtain current road structure information through detection.

On a road curve, a road may be detected by using a sensor installed on a current vehicle, to obtain curvature radius information R of the road. The sensor may be the sensor system 120 in FIG. 2 and the sensor 253 in FIG. 3, and includes a millimeter-wave radar, a laser radar, a camera, and the like. An ambient environment of the current vehicle may be detected. For example, image information of the ambient environment may be obtained by using a camera, then information such as a lane line and a road edge in the environment may be determined by using a deep learning technology, and the road structure information is determined by performing a post-processing operation, for example, fitting. For example, a reflection point on the road edge, for example, a cement fence, may be detected by using the millimeter-wave radar, and road structure information of the road edge may be obtained after a clustering operation is performed. The road structure information may be described by using a plurality of different models. In one road model description manner, description is performed by using a

model $y = C0 + C1x + C2x^2 + C3x^3$ , and a curvature radius of the road is

$$R = \frac{1}{2}C2$$ .

(2) Detect a size of an oncoming vehicle.

The size of the oncoming vehicle may also be detected by using the sensor on the current vehicle. The size of the oncoming vehicle mainly includes information such as a length and a width of the oncoming vehicle.
A method for performing detection by using a camera is described as follows: The camera obtains video stream information, generates a plurality of Bounding Boxes based on corresponding images, and then performs classification training on the bounding boxes by using a neural network based deep learning method, to obtain a bounding box of a target type with a relatively high confidence level. Then, an optimum bounding box may be selected by using a non-maximum suppression (Non-Maximum Suppression, NMS) method, thereby determining the target type and a size of the bounding box. After coordinate transformation and calculation of a corresponding camera lens are performed on the size of the bounding box on the image, an actual vehicle size in a world coordinate system may be obtained.
The target type obtained in the foregoing detection procedure may be applied to the following steps.

(3) Determine a type of the oncoming vehicle.

If a confidence level of the size of the oncoming vehicle detected in (2) is relatively low, or the size of the oncoming vehicle cannot be accurately obtained because a vehicle body of the oncoming vehicle is blocked, the type of the oncoming vehicle may be determined, and then vehicle size information corresponding to the vehicle type is determined based on the vehicle type.
If it is detected that the type of the oncoming vehicle is a trailer, a distance k between a traction pin of the trailer and a rear axle of a tractor may be determined, so that the distance is to be used in calculation of a subsequent collision risk distance.

(4) Determine a wheel track and a wheel base of the oncoming vehicle.

The wheel track d of the oncoming vehicle can be determined based on the width of the oncoming vehicle. Generally, the wheel track is equal to the width of the vehicle.
While the size of the oncoming vehicle is detected in (2), information of a distance between a front wheel and a rear wheel of the oncoming vehicle may be detected. In this way, the wheel base of the oncoming vehicle may be obtained. Optionally, if the wheel track cannot be directly detected, the wheel track may be determined by multiplying the length of the oncoming vehicle by a preset coefficient.

(5) Determine a wheel radius difference of the oncoming vehicle.

The wheel radius difference of the oncoming vehicle may be obtained based on the foregoing detected information and according to the following formula:

$$a = \sqrt{R^2 - L^2} - \frac{d}{2}$$

$$\cos\alpha = \frac{a + \dfrac{d}{2}}{R}$$

$$b = \sqrt{R^2 + (\frac{d}{2})^2 - d \times R \times \cos\alpha}$$

$$m = b - a$$

where $a$ is a moving radius of a center line of the rear wheel on an inner side of the oncoming vehicle, $a$ is an angle formed among a middle point of a front axle and a middle point of a rear axle of the oncoming vehicle and a turning circle center, and $b$ is a moving radius of a center line of the front wheel on the inner side of the oncoming vehicle.
If it is detected in the foregoing (3) that the type of the oncoming vehicle is a trailer, a wheel radius difference of the trailer may be calculated according to the following formula:

$$r = \sqrt{(a + \frac{d}{2})^2 + k^2}$$

$$c = \sqrt{r^2 - L^2}$$

$$m = b - c$$

where r is a moving radius of the traction pin, and $c$ is a moving radius of a center line of a rear wheel on an inner side of the trailer.
It can be learned from the foregoing formula that, because the wheel radius difference m is related to the curvature radius R of the curve, when the vehicle enters the curve, a wheel radius difference phenomenon already occurs. Wheel radius difference information at different points on the curve may be obtained based on the curvature radius R of the curve, so that the wheel radius difference information can be applied to calculation of the subsequent collision risk distance.

(6) Determine a collision risk point of the current vehicle.

Based on the foregoing calculated wheel radius difference information, with reference to the road structure information, where the road structure information includes lane width information, information about intrusion by the oncoming vehicle into a lane of the current vehicle may be obtained, to obtain a dangerous area in which the oncoming vehicle collides with the current vehicle.

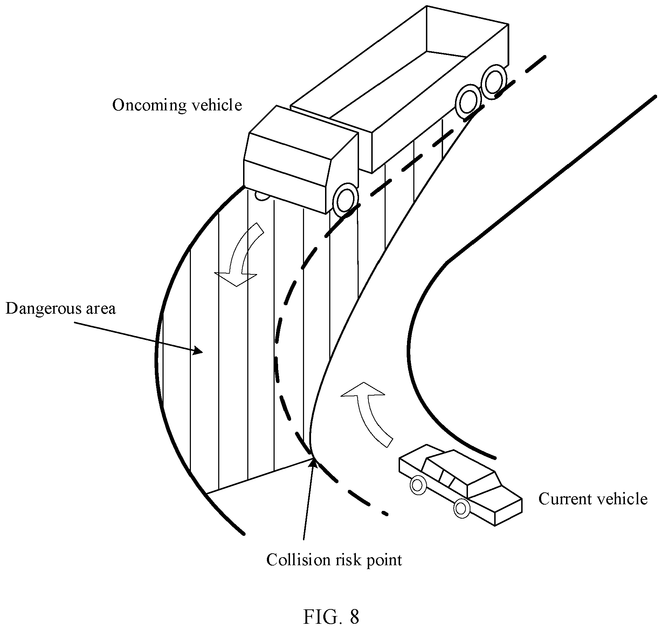

Specifically, as shown in FIG. 8, when the oncoming vehicle intrudes into the lane of the current vehicle or the wheel radius difference of the oncoming vehicle is greater than or equal to a specific threshold, an area that the oncoming vehicle already passes or is to pass is a dangerous area, and a point that is closest to the current vehicle and that is on an edge of the dangerous area is used as a predicted collision location.

(7) Remind or control the current vehicle.

After the collision risk point is calculated based on the information obtained after the current vehicle detects the road and the information obtained after the oncoming vehicle is detected, the current vehicle may be reminded or controlled before the current vehicle reaches the collision risk point. The vehicle 100 in FIG. 1 is used as an example. The vehicle-mounted computer 142 may display a prompt on a screen of the current vehicle, the speaker 144 reminds a driver by using a voice to decelerate or stop, or the control system 130 may directly control the braking unit 133 to decelerate or stop the current vehicle, to avoid a collision with the oncoming vehicle and ensure driving safety.

In the control method shown in FIG. 7, the road information and the information about the oncoming vehicle are obtained through detection by using the sensor installed on the current vehicle. In addition, based on the control method in this embodiment of this application, the road structure information may be further obtained by using a roadside unit (roadside unit, RSU), including information, for example, a curvature radius of the road. Alternatively, the information about the oncoming vehicle may further be obtained by using the vehicle-to-everything (vehicle-to-everything, V2X), including information such as the length, the width, a height, the wheel track, and the wheel base of the oncoming vehicle. If it is detected that the type of the oncoming vehicle is a trailer, the distance between the traction pin and the rear axle of the tractor may further be obtained. Compared with the information obtained through detection by using the sensor installed on the current vehicle, both the road information and the information about the oncoming vehicle that are obtained by using the RSU and the V2X are more accurate, and a wheel radius difference information obtained through calculation is also more accurate. Therefore, the dangerous area and the collision risk point may be more accurately determined, thereby ensuring that the current vehicle can perform an operation like alarming or braking before reaching the collision risk point.

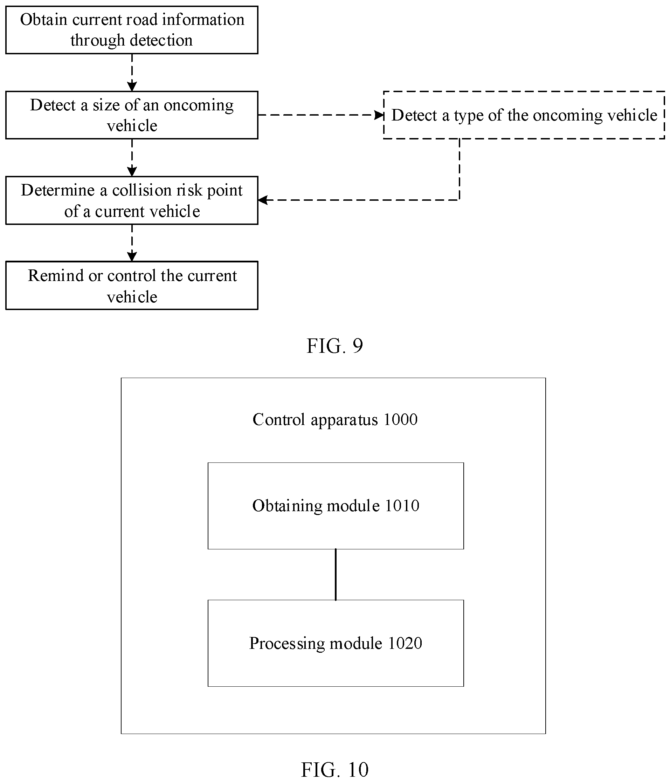

In the control method shown in FIG. 7, the detailed road structure information and the detailed information about the oncoming vehicle need to be obtained, and then the wheel radius difference information of the oncoming vehicle is calculated, to determine the dangerous area and the collision risk point. However, if there is an error in the road structure information and the information about the oncoming vehicle obtained through detection, the determined collision risk point has a relatively large error. Therefore, based on the control method in this embodiment of this application, a simplified method for determining a dangerous area and a collision risk point is further provided. FIG. 9 is a schematic block diagram of a simplified control method according to an embodiment of this application.

(1) Obtain current road information through detection.

Obtain a curvature radius R on a current road curve through detection.

(2) Detect a size of an oncoming vehicle.

Detect a length VL of the oncoming vehicle.

(3) Determine a type of the oncoming vehicle.

If a confidence level of the size of the oncoming vehicle detected in (2) is relatively low, or the size of the oncoming vehicle cannot be accurately obtained because a vehicle body of the oncoming vehicle is blocked, the type of the oncoming vehicle may be determined, and then vehicle size information corresponding to the vehicle type is determined based on the vehicle type.

It should be understood that the road information and the information about the oncoming vehicle in (1), (2), and (3) may be obtained by using a sensor disposed on a current vehicle, or may be obtained by using an RSU and the V2X. This is not limited in this embodiment of this application.

(4) Determine a collision risk point of the current vehicle.

When a curvature radius R of a road is less than a threshold, for example, when R is less than 100 meters, and it is detected that the length VL of the oncoming vehicle is greater than a threshold, for example, when VL is greater than 8 meters, it is determined that a distance D from the collision risk point to the oncoming vehicle is not less than the following value:

$$D \geq (1+\gamma) \times VL$$

where $\gamma$ is a safety coefficient of a reserved dangerous area, and is a preset coefficient with a value of (0, 1).

Based on the method, the current vehicle may be reminded or braked at a distance away from the dangerous area, to keep a safe distance from the dangerous area.

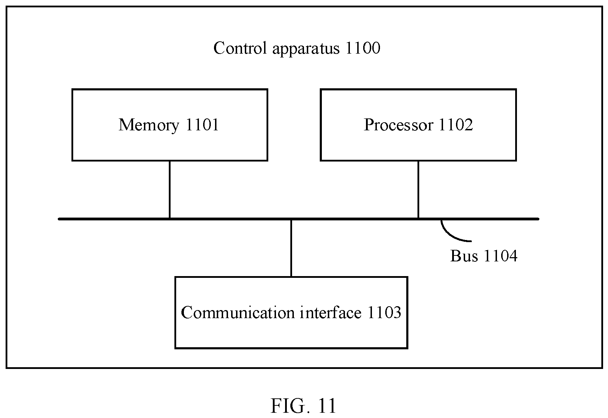

The foregoing describes, in detail, the control methods provided in embodiments of this application with reference to FIG. 1 to FIG. 9. The following describes, in detail, apparatus embodiments of this application with reference to FIG. 10 and FIG. 11. It should be understood that the control apparatus in embodiments of this application may perform the various methods in the foregoing embodiments of this application. To be specific, for specific working processes of the following products, refer to the corresponding processes in the foregoing method embodiments. It should further be understood that sequence numbers in embodiments of this application do not mean execution sequences. The execution sequences of the various processes should be determined based on functions and internal logic of the processes, and should not constitute any limitation on the implementation processes of embodiments of this application.

FIG. 10 is a schematic block diagram of a control apparatus according to an embodiment of this application. As shown in FIG. 10, the control apparatus includes an obtaining module 1010 and a processing module 1020 that are separately described below.

The obtaining module 1010 is configured to obtain information about a second terminal, where the information about the second terminal indicates a size of the second terminal.

The obtaining module 1010 is further configured to obtain information about a second lane on which the second terminal is located, where the information about the second lane indicates a curvature radius of the second lane.

The processing module 1020 is configured to output control information based on the information about the second terminal and the information about the second lane, where the control information indicates predicted information of a collision between a first terminal and the second terminal.

Optionally, the control information includes a predicted collision location, and that the processing module 1020 outputs control information includes: displaying the predicted collision location by using a display apparatus; or the control information includes sound warning information, and that the processing module outputs control information includes: playing the sound warning information by using a speaker; or the control information includes vehicle control information, and that the processing module outputs control information includes: controlling the first terminal by using a braking system, to avoid the predicted collision location.

Optionally, the second terminal is a second vehicle, the information about the second terminal includes a wheel track of the second vehicle and a wheel base of the second vehicle, the control information includes the predicted collision location, and the predicted collision location is obtained based on the curvature radius of the second lane, the wheel track of the second vehicle, and the wheel base of the second vehicle.

Optionally, a type of the second vehicle is a trailer, the information about the second terminal further includes a distance between a traction pin of the second vehicle and a rear axle of a tractor, and the predicted collision location is obtained based on the curvature radius of the second lane, the wheel track of the second vehicle, the wheel base of the second vehicle, and the distance between the traction pin of the second vehicle and the rear axle of the tractor.

Optionally, the second terminal is a second vehicle, the information about the second terminal includes a vehicle body length of the second vehicle, the control information includes the predicted collision location, and the predicted collision location is determined based on the curvature radius of the second lane and the vehicle body length of the second vehicle.

Optionally, the obtaining module 1010 is a sensor or a communication module.

Optionally, the second lane is adjacent to a first lane on which the first terminal is located, and the predicted collision location is located on a curve of the first lane or the second lane.

It should be understood that the control apparatus 1000 shown in FIG. 10 is merely an example, and the apparatus in this embodiment of this application may further include another module or unit. It should be understood that the control apparatus 1000 can perform the steps in the control method in FIG. 6, FIG. 7, or FIG. 9. To avoid repetition, details are not described herein again.

FIG. 11 is a schematic diagram of a structure of a control apparatus according to an embodiment of this application.

The control apparatus 1100 shown in FIG. 11 includes a memory 1101, a processor 1102, a communication interface 1103, and a bus 1104. A communication connection among a memory 1101, a processor 1102, and a communication interface 1103 is implemented through a bus 1104.

The memory 1101 may be a read-only memory (read-only memory, ROM), a static storage device, a dynamic storage device, or a random access memory (random access memory, RAM). The memory 1101 may store a program. When the program stored in the memory 1101 is executed by the processor 1102, the processor 1102 is configured to perform the steps of the control method in the embodiment of this application, for example, may perform the steps in the embodiment shown in FIG. 6, FIG. 7, or FIG. 9.

The processor 1102 may use a general-purpose central processing unit (central processing unit, CPU), a microprocessor, an application-specific integrated circuit (application-specific integrated circuit, ASIC), or one or more integrated circuits, and is configured to execute a related program, to implement the control method in the method embodiment of this application.

Alternatively, the processor 1102 may be an integrated circuit chip, and has a signal processing capability. In an implementation process, the steps of the control method in the embodiment of this application may be completed by using an integrated logic circuit of hardware or instructions in a form of software in the processor 1102.

The processor 1102 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware and software modules in a decoding processor. The software module may be located in a mature storage medium in the art, like a random access memory, a flash memory, a read-only memory, a programmable read-only memory, an electrically erasable programmable memory, or a register. The storage medium is located in the memory 1101. The processor 1102 reads information in the memory 1101, and completes, in combination with hardware of the processor 1102, a function that needs to be executed by a unit included in a behavior planning apparatus of a vehicle in the embodiment of this application, or performs the control method in the method embodiment of this application, for example, may perform the steps or execute the functions in the embodiment shown in FIG. 6, FIG. 7, or FIG. 9.

The communication interface 1103 may use, but is not limited to, a transceiver apparatus of a transceiver type, to implement communication between the control apparatus 1100 and another device or a communication network.

The bus 1104 may include a path for transferring information between components (such as the memory 1101, the processor 1102, and the communication interface 1103) of the control apparatus 1100.

It should be noted that although only the memory, the processor, and the communication interface that are in the control apparatus 1100 are shown, in a specific implementation process, a person skilled in the art should understand that the control apparatus 1100 may further include another component required for implementing normal running. In addition, based on a specific requirement, a person skilled in the art should understand that the control apparatus 1100 may further include a hardware component for implementing another additional function. In addition, a person skilled in the art should understand that the control apparatus 1100 may also include only components required for implementing embodiments of this application, but does not need to include all the components shown in FIG. 11.

It should be understood that the control apparatus shown in this embodiment of this application may be a vehicle-mounted device in a vehicle, or may be a chip configured in a vehicle-mounted device.

An embodiment of this application further provides a vehicle, and the vehicle includes the control apparatus for performing the foregoing method embodiment.

An embodiment of this application further provides a chip, and the chip includes a transceiver unit and a processing unit. The transceiver unit may be an input/output circuit or a communication interface. The processing unit is a processor, a microprocessor, or an integrated circuit integrated on the chip. The chip may perform the control method in the foregoing method embodiment.

An embodiment of this application further provides a computer-readable storage medium, and instructions are stored in the computer-readable storage medium. When the instructions are executed, the control method in the foregoing method embodiment is performed.

An embodiment of this application further provides a computer program product including instructions. When the instructions are executed, the control method in the foregoing method embodiment is performed.

It should be understood that the processor in this embodiment of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may further be understood that the memory in the embodiment of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative descriptions, many forms of random access memories (random access memory, RAM) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

All or some of the foregoing embodiments may be implemented by using software, hardware, firmware, or any other combination thereof. When software is used to implement the embodiments, all or some of the foregoing embodiments may be implemented in a form of a computer program product. The computer program product includes one or more computer instructions or computer programs. When the computer instructions or the computer programs are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, like a server or a data center, integrating one or more usable media. The usable medium may be a magnetic medium (like a floppy disk, a hard disk, or a magnetic tape), an optical medium (for example, a DVD), a semiconductor medium, or the like. The semiconductor medium may be a solid-state drive.

It should be understood that the term "and/or" in this specification describes only an association relationship for describing associated objects and represents that three relationships may exist. For example, A and/or B may represent three cases: Only A exists, both A and B exist, and only B exists, where A and B may be singular or plural. In addition, the character "/" in this specification generally indicates an "or" relationship between the associated objects, but may also indicate an "and/or" relationship. The relationship can be understood by referring to the context.

In this application, "at least one" refers to one or more and "a plurality of" refers to two or more. "At least one of the following items (pieces)" or a similar expression thereof indicates any combination of the items, including a singular item (piece) or any combination of a plurality of items (pieces). For example, at least one item (piece) of a, b, or c may indicate a, b, c, a and b, a and c, b and c, or a, b, and c, where a, b, and c may be singular or plural.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The storage medium includes any medium that can store program code, like a USB flash drive, a removable hard disk, a read-only memory (Read-Only Memory, ROM), a random access memory (Random Access Memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A control method, wherein the method comprises:

   obtaining information about a second terminal, wherein the information about the second terminal indicates a size of the second terminal;
   obtaining information about a second lane on which the second terminal is located, wherein the information about the second lane indicates a curvature radius of the second lane; and
   outputting control information based on the information about the second terminal and the information about the second lane, wherein the control information indicates predicted information of a collision between a first terminal and the second terminal.

2. The method according to claim 1, wherein the outputting control information meets at least one of the following:

   the control information comprises a predicted collision location, and the outputting control information comprises: displaying the predicted collision location by using a display apparatus;
   the control information comprises sound warning information, and the outputting control information comprises: playing the sound warning information by using a speaker; or
   the control information comprises vehicle control information, and the outputting control information comprises: controlling the first terminal by using a braking system, to avoid a predicted collision location.

3. The method according to claim 1 or 2, wherein the second terminal is a second vehicle, the information about the second terminal comprises a wheel track of the second vehicle and a wheel base of the second vehicle, the control information comprises the predicted collision location, and the predicted collision location is obtained based on the curvature radius of the second lane, the wheel track of the second vehicle, and the wheel base of the second vehicle.

4. The method according to claim 3, wherein a type of the second vehicle is a trailer, the information about the second terminal further comprises a distance between a traction pin of the second vehicle and a rear axle of a tractor, and the predicted collision location is obtained based on the curvature radius of the second lane, the wheel track of the second vehicle, the wheel base of the second vehicle, and the distance between the traction pin of the second vehicle and the rear axle of the tractor.

5. The method according to claim 1 or 2, wherein the second terminal is a second vehicle, the information about the second terminal comprises a vehicle body length of the second vehicle, the control information comprises the predicted collision location, and the predicted collision location is determined based on the curvature radius of the second lane and the vehicle body length of the second vehicle.

6. The method according to any one of claims 1 to 5, wherein the information about the second terminal and the information about the second lane are obtained by using at least one sensor, map module, and/or communication module.

7. The method according to any one of claims 1 to 6, wherein the second lane is adjacent to a first lane on which the first terminal is located, and the predicted collision location is located on a curve of the first lane or the second lane.

8. A control apparatus, wherein the apparatus comprises:

   an obtaining module, configured to obtain information about a second terminal, wherein the information about the second terminal indicates a size of the second terminal; and
   the obtaining module is further configured to obtain information about a second lane on which the second terminal is located, wherein the information about the second lane indicates a curvature radius of the second lane; and
   a processing module, configured to output control information based on the information about the second terminal and the information about the second lane, wherein the control information indicates predicted information of a collision between a first terminal and the second terminal.

9. The apparatus according to claim 8, wherein the outputting control information meets at least one of the following:

the control information comprises a predicted collision location, and that the processing module is configured to output control information comprises: displaying the predicted collision location by using a display apparatus;

the control information comprises sound warning information, and that the processing module outputs control information comprises: playing the sound warning information by using a speaker;

or the control information comprises vehicle control information, and that the processing module outputs control information comprises: controlling the first terminal by using a braking system, to avoid a predicted collision location.

10. The apparatus according to claim 8 or 9, wherein the second terminal is a second vehicle, the information about the second terminal comprises a wheel track of the second vehicle and a wheel base of the second vehicle, the control information comprises the predicted collision location, and the predicted collision location is obtained based on the curvature radius of the second lane, the wheel track of the second vehicle, and the wheel base of the second vehicle.

11. The apparatus according to claim 10, wherein a type of the second vehicle is a trailer, the information about the second terminal further comprises a distance between a traction pin of the second vehicle and a rear axle of a tractor, and the predicted collision location is obtained based on the curvature radius of the second lane, the wheel track of the second vehicle, the wheel base of the second vehicle, and the distance between the traction pin of the second vehicle and the rear axle of the tractor.

12. The apparatus according to claim 8 or 9, wherein the second terminal is a second vehicle, the information about the second terminal comprises a vehicle body length of the second vehicle, the control information comprises the predicted collision location, and the predicted collision location is determined based on the curvature radius of the second lane and the vehicle body length of the second vehicle.

13. The apparatus according to any one of claims 8 to 12, wherein the obtaining module is a sensor, a map module, or a communication module.

14. The apparatus according to any one of claims 8 to 13, wherein the second lane is adjacent to a first lane on which the first terminal is located, and the predicted collision location is located on a curve of the first lane or the second lane.

15. A control apparatus, comprising at least one processor and an interface circuit, wherein

the interface circuit is configured to provide program instructions or data for the at least one processor; and
the at least one processor is configured to execute the program instructions, to implement the control method according to any one of claims 1 to 7.

16. A vehicle, comprising the control apparatus according to any one of claims 8 to 14.

17. A computer-readable storage medium, wherein program instructions are stored in the computer-readable storage medium, and when the program instructions are run by a computer, the control method according to any one of claims 1 to 7 is implemented.

18. A chip, wherein the chip comprises at least one processor and a data interface, and the processor reads, by using the data interface, instructions stored in a memory, to perform the control method according to any one of claims 1 to 7.

Inner wheel
radius difference

FIG. 1

Vehicle 100

Travel system 110
- Engine 111
- Transmission device 112
- Energy source 113
- Wheels 114

Sensor system 120
- Positioning system 121
- Inertia measurement unit 122
- Radar 123
- Laser rangefinder 124
- Camera 125

Control system 130
- Steering system 131
- Throttle 132
- Braking unit 133
- Computer vision system 134
- Route control system 135
- Obstacle avoidance system 136

Peripheral 140
- Wireless communication system 141
- Vehicle-mounted computer 142
- Microphone 143
- Speaker 144

Computer system 150
- Processor 151
- Memory 152
  - Instructions 153

Power supply 160

User interface 170

FIG. 2

EP 4 246 492 A1

System memory
235

Operating system
237

Shell 239

Kernel 241

Application
program 243

Autonomous
driving related
program
247

Processor

203

Hard disk drive

233

Hardware drive
interface

231

System bus 205

Bus bridge

211

Video adapter

207

I/O bus

215

225

Network
interface

229

I/O interface

USB port

Display

209

Input device

217

Media tray

221

Transceiver

223

Camera

255

Sensor

253

Network

227

Software
deployment
server

249

FIG. 3

FIG. 4

Large vehicle

Inner wheel
radius difference

Small vehicle

FIG. 5

S601. Obtain information about a second terminal, where the information about the second terminal indicates a size of the second terminal

S602. Obtain information about a second lane on which the second terminal is located, where the information about the second lane indicates a curvature radius of the second lane

S603. Output control information based on the information about the second terminal and the information about the second lane, where the control information indicates predicted information of a collision between a first terminal and the second terminal

FIG. 6

Obtain current road information
through detection

Detect a size of an oncoming vehicle → Detect a type of the oncoming vehicle

Determine a wheel track and a wheel
base of the oncoming vehicle

Determine a wheel radius difference
of the oncoming vehicle

Determine a collision risk point of a
current vehicle

Remind or control the current vehicle

FIG. 7

Oncoming vehicle

Dangerous area

Collision risk point

Current vehicle

FIG. 8

Obtain current road information through detection

↓

Detect a size of an oncoming vehicle - - - - - - → Detect a type of the oncoming vehicle

↓

Determine a collision risk point of a current vehicle ← - - - - - - - - - - -

↓

Remind or control the current vehicle

FIG. 9

Control apparatus 1000

Obtaining module 1010

Processing module 1020

FIG. 10

Control apparatus 1100

Memory 1101

Processor 1102

Bus 1104

Communication interface 1103

FIG. 11

## INTERNATIONAL SEARCH REPORT

| International application No. |
|---|
| **PCT/CN2021/131390** |

| A. | CLASSIFICATION OF SUBJECT MATTER |
|---|---|

G08G 1/16(2006.01)i

According to International Patent Classification (IPC) or to both national classification and IPC

| B. | FIELDS SEARCHED |
|---|---|

Minimum documentation searched (classification system followed by classification symbols)

G08G

Documentation searched other than minimum documentation to the extent that such documents are included in the fields searched

Electronic data base consulted during the international search (name of data base and, where practicable, search terms used)

CCNPAT; CNKI; WPI; EPODOC: 华为技术有限公司, 尺寸, 轮距, 轴距, 长度, 曲率, 碰撞, 内轮差, 车联网, 通讯, 通信, track, width, wheelbase, distance, length, curvature, collision, inner, wheel, difference, vehicle, network

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 103802720 A (JIANGSU XIN AN ELECTRIC APPLIANCE CO., LTD.) 21 May 2014 (2014-05-21)<br>  description paragraphs 38-48, figure 1 | 1-18 |
| A | JP 2007072641 A (EQUOS RES CO., LTD.) 22 March 2007 (2007-03-22)<br>  entire document | 1-18 |
| A | CN 110194160 A (TOYOTA JIDOSHA KABUSHIKI KAISHA) 03 September 2019 (2019-09-03)<br>  entire document | 1-18 |
| A | CN 110920524 A (ZHONGYUN ZHIWANG DATA INDUSTRY (CHANGZHOU) CO., LTD.) 27 March 2020 (2020-03-27)<br>  entire document | 1-18 |
| A | CN 111583713 A (TENCENT TECHNOLOGY SHENZHEN CO., LTD.) 25 August 2020 (2020-08-25)<br>  entire document | 1-18 |
| A | CN 110509847 A (CHONGQING VOCATIONAL INSTITUTE OF ENGINEERING) 29 November 2019 (2019-11-29)<br>  entire document | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 December 2021** | **16 February 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/131390**

| Patent document cited in search report | | | Publication date (day/month/year) | Patent family member(s) | | | Publication date (day/month/year) |
|---|---|---|---|---|---|---|---|
| CN | 103802720 | A | 21 May 2014 | CN | 103802720 | B | 21 September 2016 |
| JP | 2007072641 | A | 22 March 2007 | | None | | |
| CN | 110194160 | A | 03 September 2019 | US | 2019265695 | A1 | 29 August 2019 |
| | | | | US | 11188076 | B2 | 30 November 2021 |
| | | | | JP | 2019148964 | A | 05 September 2019 |
| | | | | JP | 6954180 | B2 | 27 October 2021 |
| CN | 110920524 | A | 27 March 2020 | | None | | |
| CN | 111583713 | A | 25 August 2020 | | None | | |
| CN | 110509847 | A | 29 November 2019 | | None | | |

Form PCT/ISA/210 (patent family annex) (January 2015)

**REFERENCES CITED IN THE DESCRIPTION**

**Patent documents cited in the description**

- CN 202011493106